# EUROPÄISCHE PATENTANMELDUNG

(11) **EP 1 322 013 A2**
(43) Veröffentlichungstag der Anmeldung: **25.06.2003**
(21) Anmeldenummer: 02022721.1
(22) Anmeldetag: 11.10.2002
(51) Int. Cl.: H02G 3/12

(54) **Anordnung aus Kunststoff für die Botonbauinstallation**

(30) Priorität: 13.12.2001 DE 10161172
(71) Anmelder: Kaiser GmbH & Co. KG, D-58579 Schalksmühle (DE)
(72) Erfinder: Sanz-Martin, Yavier, 58762 Altena (DE); Purschke, Norbert, 58579 Schalksmühle (DE); Engler, Peter, 57074 Siegen (DE)
(74) Vertreter: Patentanwälte Dipl.-Ing. Conrad Köchling Dipl.-Ing. Conrad-Joachim Köchling

(57) **Zusammenfassung**

Um eine Anordnung aus Kunststoff für die Betonbauinstallation zur lagerichtigen Anordnung und Halterung von Installationsteilen (1), bestehend aus zwei Tragteilen (2,3) mit zwei in unterschiedlichen axialen Positionen schiebeverbindbaren Abstandshaltern (4,5) zu schaffen, die relativ einfach gefertigt werden kann und die einfach sowie präzise zu handhaben ist, wird vorgeschlagen, dass der erste Abstandhalter (4) durch ein von dem ersten Tragteil (2) abragendes, rechteckiges Rohrprofil gebildet ist, welches auf Außenflächen als Schiebeverbindungsmittel erste Zahnungen (6) aufweist, und dass der zweite Abstandhalter (5) durch ein vom zweiten Tragteil (3) abragendes, U-förmiges Profilstück gebildet ist, welches innen auf den Schenkeln als Schiebeverbindungsmittel zweite Zahnungen (7) aufweist.

## Beschreibung

Die Erfindung betrifft eine Anordnung aus Kunststoff für die Betonbauinstallation zur lagerichtigen Anordnung und Halterung von Installationsteilen, insbesondere elektrotechnischen Installationsteilen, bestehend aus zwei Tragteilen, die durch zwei trennbare und in mindestens zwei unterschiedlichen axialen Positionen fest zusammenfügbare Abstandshalter verbunden sind, wobei die Abstandshalter über quer zur Längsachse der Anordnung angeordnete komplementäre Schiebeverbindungen zusammensetzbar sind, so dass insbesondere bei liegender Betonbauschalung ein Tragteil an der Schalung befestigbar bzw. an diese anlegbar ist und das andere Tragteil in einem der Dicke des zu betonierenden Bauteiles entsprechenden Abstand von der Schalung angeordnet ist.

Eine derartige Anordnung ist aus der WO 98/53541 bekannt. Bei der bekannten Anordnung, die insbesondere dafür bestimmt ist, zwischen zwei Schaltafeln eingespannt zu werden, wird insbesondere die komplizierte Form der Abstandhalter als nachteilig angesehen. Hierbei sind nämlich die Abstandhalter durch komplementäre Schiebeverbindungen miteinander verbindbar, bei denen das eine Element aus einer T-förmigen Nut und das andere Element aus einem T-förmigen Steg besteht. Eine solche Ausbildung ist relativ kompliziert in der Formgebung, insbesondere wenn die entsprechenden Teile aus Kunststoff geformt werden. Darüber hinaus sind diese Element auch kompliziert in der Handhabung, weil der Benutzer genaues Augenmerk auf die Verbindungselemente richten muss und diese exakt zueinander positionieren muss, um die Teile durch Schiebeverbindung miteinander verbinden zu können. Die exakte Passung der Teile zueinander ist schwierig einstellbar, weil schon bei geringen Fertigungstoleranzen der Kunststoffteile kein sicherer Sitz zu erreichen ist und bei exakt genauer Positionierung ein Klemmeffekt auftritt, so dass die Teile nur schwierig miteinander schiebeverbindbar sind. Zudem ist beim Zusammenschieben der Teile keine exakte Positionierung der Teile zueinander möglich, da für die Schiebebewegung kein Endanschlag gebildet ist.

Ausgehend von diesem Stand der Technik liegt der Erfindung die Aufgabe zugrunde, eine Anordnung gattungsgemäßer Art zu schaffen, die relativ einfach gefertigt werden kann und die einfach sowie präzise zu handhaben ist.

Zur Lösung dieser Aufgabe schlägt die Erfindung vor, dass der erste Abstandhalter durch ein von dem ersten Tragteil abragendes Rohrprofil mit rechteckigem Querschnitt gebildet ist, welches auf zwei zueinander parallelen Außenflächen als Schiebeverbindungsmittel erste Zahnungen aufweist, und dass der zweite Abstandhalter durch ein vom zweiten Tragteil abragendes Profilstück mit U-förmigem Querschnitt gebildet ist, welches innen liegend auf den Schenkeln als Schiebeverbindungsmittel zweite Zahnungen aufweist.

Durch das als Vierkantprofil ausgebildete Rohrprofil des ersten Tragteiles wird ein sehr steifes und stabiles Stützelement geschaffen. Auch das zweite Tragteil, welches im Querschnitt U-förmig ausgebildet ist, ist äußerst formstabil und formhaltig. Beide Teile können sehr einfach aus Kunststoff gefertigt werden, wobei die entsprechenden Zahnungen, die die Verbindungsmittel der Schiebeverbindung herstellen in einfacher Weise durch ein relativ unkompliziertes Kunststoffwerkzeug gefertigt werden können. Die Handhabung einer solchen Anordnung ist denkbar einfach, wobei der Benutzer lediglich die Teile lagerichtig einander zuführen und quer zueinander verschieben muss. Das Auffinden der entsprechenden Zahnungen und das Einschieben in die Zahnungen ist in einfacher Weise durchzuführen, wobei selbst dann, wenn beim Baustellenbetrieb die Zahnungen verschmutzt sind, ein einwandfreies Aufschieben ermöglicht ist, da die offenen Zahnungen beim Aufschieben von anhaftenden Verunreinigungen befreit werden. Zudem ist durch die gewählte Raumform der Tragteile eine Positionierungshilfe gebildet, da in der Soll-Montagelage das zweite Profilstück mit U-förmigen Querschnitt nur so weit auf das erste Tragteil aufgeschoben werden kann, bis die Basis des U-förmigen Teiles an der entsprechenden Gegenfläche des als Vierkantprofil ausgebildeten Rohrprofils anliegt. Hierdurch ist ein Endanschlag gebildet, der vom Benutzer ohne weiteres aufzufinden und einzuhalten ist.

Zudem ist die Anordnung durch die gewählte Raumform stabil, so dass die beim Betonieren auftretenden Lasten in Achsrichtung der Abstandshalter und auch in Torsionsrichtung gut aufgenommen werden könne, ohne dass die Anordnung Schaden nimmt.

Um die Fertigung weiter zu vereinfachen ist zudem vorgesehen, dass die Zahnungen keinen Hinterschnitt aufweisen.

Besonders bevorzugt ist aus dem gleichen Grunde vorgesehen, dass die Zahnungen durch im Querschnitt rechteckige Stabformen gebildet sind.

Zudem ist bevorzugt vorgesehen, dass die Zahnungen nahezu spielfrei ineinander greifen, so dass Bewegungen in Längsrichtung der Abstandhalter unterbunden sind.

Um sicherzustellen, dass beim Betonieren auch Betonmaterial in die von dem Rohrprofil umschlossenen Räume eindringen kann, ist vorgesehen, dass mindestens die zahnungsfreien Seitenflächen des Rohrprofils und/oder die Basisfläche des Profilstücks großflächige Wandungsausnehmungen aufweisen.

Um einen besonders sicheren Halt der Teile aneinander in der Montagesollposition zu gewährleisten und zudem eine Montagehilfe für den Benutzer zur Verfügung zu stellen, wobei zudem auch eine äußerst hohe Torsionsfestigkeit des zusammengesetzten Elementes sichergestellt ist, wird vorgeschlagen, dass am in Einschubrichtung des Profilstückes hinten liegenden Wandungsbereich des Rohrprofils federnde Rastnasen, die bei aufgeschobenem Profilstück jeweils eine der an beiden freien Schenkelenden des Profilstückes vorgesehenen Rastleisten rastend übergreift, sowie nicht federnde Haltenasen vorgesehen ist, die die Rastleisten in der Einschubposition übergreifen.

Beim Einschieben des im Querschnitt U-förmigen Teiles auf das im Querschnitt rechteckige Teil federn die Rastnasen in Endposition geringfügig auf, so dass die entsprechende Rastleiste des anderen Profilstückes übergriffen ist und ein sicherer Sitz gebildet ist. Um sicherzustellen, dass bei eventueller tordierenden Bewegung der Teile zueinander dieser Rastsitz nicht aufgehoben wird, sind zusätzlich die nicht federnden Haltenasen vorgesehen, die die entsprechenden Rastleisten des aufgeschobenen Stücks in der Einschubposition übergreifen und somit bei einer tordierenden Bewegung der Teile zueinander das Ausrasten der Rastverbindungsmittel verhindert.

Besonders bevorzugt ist zur Verbesserung der Positionslagesicherung vorgesehen, dass jeweils paarweise zwei federnde Rastnasen und zwischen diesen eine nicht federnde Haltenase eng benachbart nebeneinander vorgesehen sind.

Eine besonders bevorzugte Weiterbildung wird darin gesehen, dass jede Rastnase am freien Ende eines L-förmigen, an einer zahnungsfreien Wandung des Rohrprofils außen angeformten Steges ausgebildet ist.

Zudem ist vorgesehen, dass jede nicht federnde Haltenase durch einen L-förmigen, an einer zahnungsfreien Wandung des Rohrprofils außen angeformten steifen Steg gebildet ist.

Um die Stabilität der nicht federnden Haltenase noch zu verbessern ist vorgesehen, dass der Steg durch eine in Steglängsrichtung verlaufende, außenseitig des Steges angeformte Rippe versteift ist.

Um die Federung der federnden Rastnase zu verbessern ist vorgesehen, dass der an der zahnungsfreien Wandung angeformte Schenkel des die Rastnase tragenden Steges federnd ausgebildet ist.

Eine besonders bevorzugte Weiterbildung, die auch bei herkömmlichen Anordnungen gemäß Stand der Technik vorteilhaft ist, besteht darin, dass jedes Tragteil aus einer im wesentlichen ebenen Platte besteht, die an ihrer dem anderen Tragteil abgewandten Seite druckknopfartige Verbinder und/oder zu einem druckknopfartigen Verbinder komplementäre Rastlochungen aufweist, und dass jedes an dem Tragteil befestigbare Installationsteil, z.B. in Form einer Installationsdose oder eines Magnethalters, eine zur Platte des Tragteils passende Fläche mit druckknopfartigen Verbindern und/oder Rastlochungen aufweist, so dass das Installationsteil mit dem Tragteil steckverbindbar ist.

Gemäß dieser Anordnung ist es in einfacher Weise möglich, die lediglich eine endseitige Platte aufweisenden Tragteile jeweils mit entsprechenden Installationsteilen, beispielsweise einer Installationsdose zu bestücken, indem diese lediglich aufgesteckt und durch die druckknopfartige Verbindung aufgerastet wird. Die Teile sind so in einfacher Weise miteinander zu verbinden, wobei der Benutzer die Wahlmöglichkeit hat, die entsprechenden Tragteile mit unterschiedlichen Installationsteilen zu bestücken. Dies vermindert sowohl den Fertigungsaufwand als auch den Lagerhaltungsaufwand, da die gleichen Trageteile für die Anordnung und Befestigung unterschiedlichster Installationsteile geeignet und bestimmt sind.

Um eine weitere Stabilisierung der Anordnung zu gewährleisten ist zudem vorgesehen, dass das Profilstück außenseitig über die Schenkel und die Basis verlaufende, angeformte Versteifungsstege aufweist.

Ausführungsbeispiele der Erfindung sind in der Zeichnung dargestellt und im Folgenden näher beschrieben.

Es zeigt:

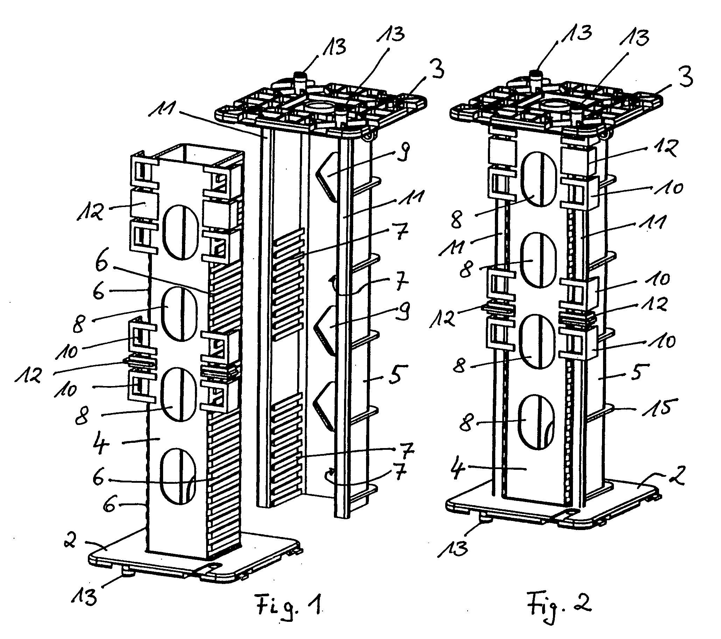

- Figur 1: eine erste Anordnung in noch nicht zusammengeschobener Lage;
- Figur 2: desgleichen in der Montagesolllage;

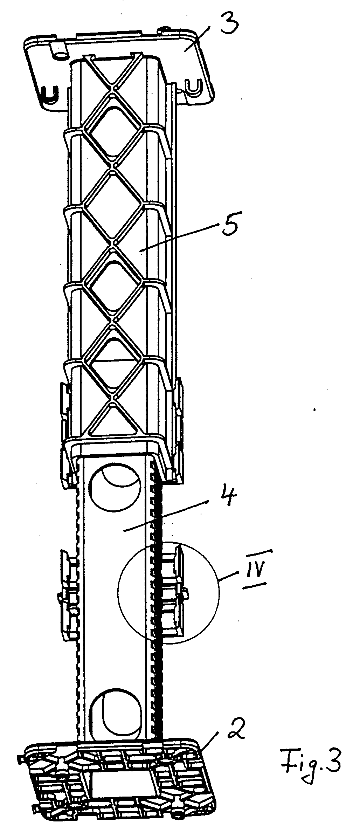

- Figur 3: desgleichen in einer anderen Position;
- Figur 4: die Einzelheit IV der Figur 3 in vergrößertem Maßstab;

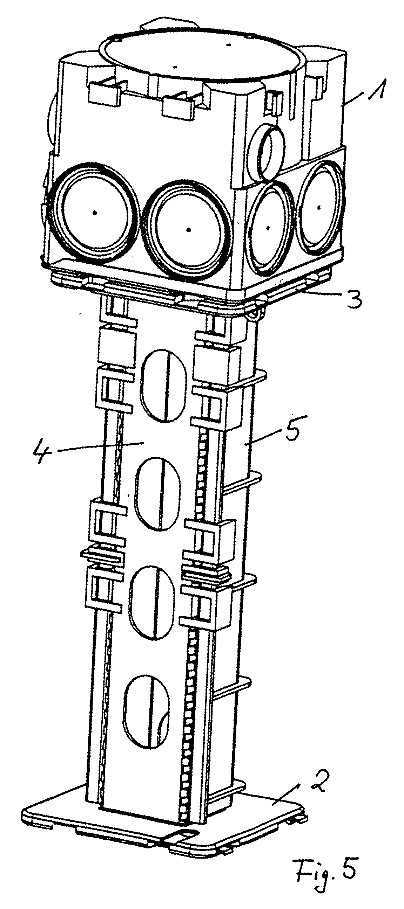

- Figur 5: die Anordnung gemäß Figur 2 mit angeordnetem Installationsteil;

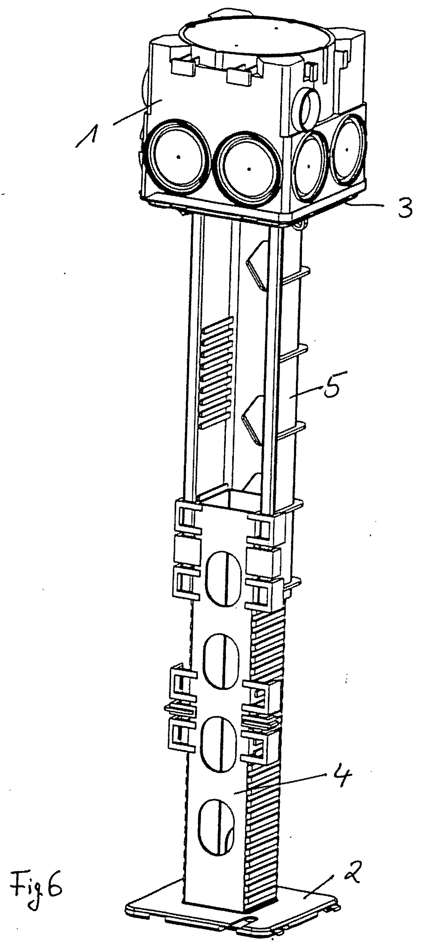

- Figur 6: desgleichen in Position gemäß Figur 3;

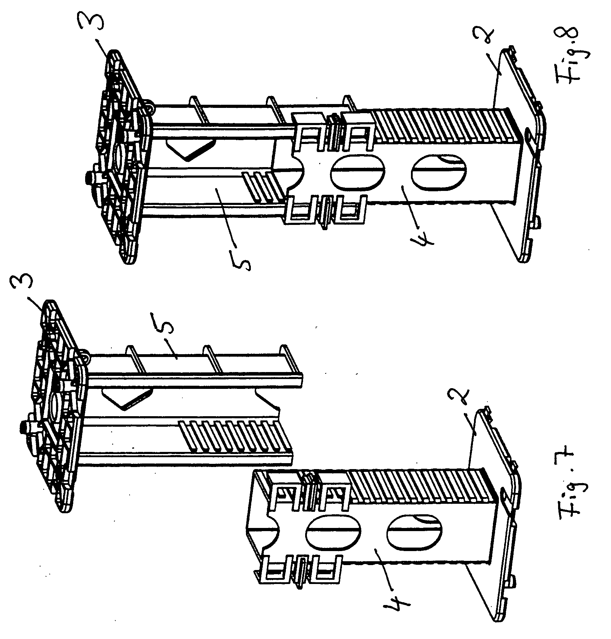

- Figur 7 und 8: eine Variante in der Ansicht gemäß Figur 1 und 2.

In der Zeichnung ist eine Anordnung aus Kunststoff für die Betonbauinstallation gezeigt. Sie dient zur lagerichtigen Anordnung und Halterung von Installationsteilen 1, beispielsweise einer Installationsdose oder dergleichen. Die Anordnung besteht aus zwei Tragteilen 2, 3, die durch zwei voneinander trennbare und in mindestens zwei unterschiedlichen axialen Positionen fest zusammenfügbare Abstandshalter 4 bzw. 5 verbunden sind. Die Abstandshalter 4, 5 sind durch quer zu ihrer Längsachse angeordnete komplementäre Schiebeverbindungen zusammensetzbar, so dass vornehmlich bei liegender Betonbauschalung ein Tragteil, beispielsweise 2, an der Schalung befestigbar bzw. an diese anlegbar ist und das andere Tragteil, beispielsweise 3, in einem der Dicke des zu betonierenden Bauteiles entsprechenden Abstand von der Schalung angeordnet ist.

Der erste Abstandhalter 4 ist durch ein von dem ersten Tragteil 2 abragendes Rohrprofil mit rechteckigem Querschnitt gebildet, welches auf zwei zueinander parallelen Außenflächen als Schiebeverbindungsmittel erste Zahnungen 6 aufweist. Der zweite Abstandhalter 5 ist durch ein vom zweiten Tragteil 3 abragendes Profilstück mit U-förmigem Querschnitt gebildet, welches innen liegend auf den Schenkeln als Schiebeverbindungsmittel zweite Zahnungen 7 aufweist.

Die Zahnungen 6, 7 sind so geformt, dass sie keinen Hinterschnitt aufweisen und durch im Querschnitt etwa rechteckige Stabformen gebildet sind. In der Montagesollposition, die beispielsweise in Figur 2 gezeigt ist, greifen die Zahnungen 6, 7 nahezu spielfrei ineinander, so dass Bewegungen in Längsrichtung der Abstandhalter 4, 5 unterbunden sind.

Die zahnungsfreien Seitenflächen des Rohrprofils und die Basisfläche des U-förmigen Profilstücks weisen jeweils großflächige Wandungsausnehmungen 8, 9 auf, so dass beim Betonierungsvorgang Betonmasse auch in den von dem Abstandhalter 4 umschlossenen Hohlraum einfließen kann.

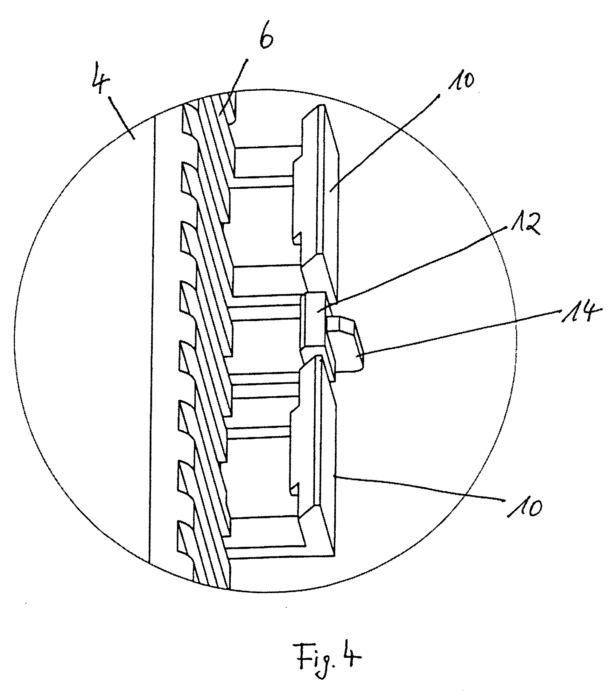

Wie insbesondere in der Zeichnungsfigur 4 verdeutlicht, sind am in Einschubrichtung des als U-förmiges Profilstück ausgebildeten Abstandhalters 5 hinten liegenden Wandungsbereich des Rohrprofils des Abstandhalters 4 federnde Rastnasen 10 vorgesehen, die bei aufgeschobenem Profilstück (Abstandhalter 5) jeweils eine der an beiden freien Schenkelenden des Profilstückes vorgesehenen Randleisten 11 übergreift. Ferner ist eine nicht federnde Haltenase 12 vorgesehen, die die Rastleiste 11 in der Einschubposition übergreift. Vorzugsweise ist dabei jeweils die paarweise Anordnung von zwei federnden Rastnasen 10 und zwischen diesen eine nicht federnde Haltenase 12 eng benachbart nebeneinander vorgesehen, wie in Figur 4 verdeutlicht ist. Hierdurch wird einerseits sichergestellt, dass beim Einschieben des Abstandhalters 5 auf den Abstandhalter 4 eine federnde Rastung im Bereich der Teile 10, 11 erfolgt, wobei durch die Teile 12 verhindert wird, dass die Schenkel des U-förmigen Abstandhalters 5 sich aufbiegen, wenn eine tordierende Belastung um die Längsachse der Anordnung aufgebracht wird.

Jede Rastnase 10 ist am freien Ende eines etwa L-förmigen, an einer zahnungsfreien Wandung des Rohrprofils des Abstandhalters 4 außen angeformten Steges ausgebildet. Jede nicht federnde Haltenase 12 ist ebenfalls an einem L-förmigen, an einer zahnungsfreien Wandung des als Rohrprofil ausgebildeten Abstandhalters 4 außen angeformt. Hierbei ist der Steg steif ausgebildet, wohingegen der Steg bei den Rastnasen 10 federnd ausgebildet ist.

Jedes Tragteil 2 bzw. 3 besteht aus einer im Wesentliche ebenen Platte, die an ihrer dem jeweils anderen Tragteil abgewandten Seite druckknopfartige Verbinder 13 aufweist. Jedes an dem entsprechenden Tragteil 2 bzw. 3 befestigbare Installationsteil 1 weist an einer zur Fläche des Tragteiles 2 bzw. 3 parallelen Fläche entsprechende Rastlochungen auf, so dass das Installationsteil 1 mit dem jeweiligen Tragteil 2 oder 3 steckverbindbar und in Steckverbindung druckknopfartig gerastet gehalten ist.

Zur Verstärkung des Steges der nicht federnden Haltenase 12 ist dieser noch außenseitig mit einer Rippe 14 versehen.

Zur Versteifung weist ferner der zweite Abstandhalter 5, welcher als U-förmiges Profilstück ausgebildet ist, über die Schenkel und die Basis außen verlaufende Versteifungsstege 15 auf.

Die Erfindung stellt eine Anordnung zur Verfügung, die relativ einfach zu fertigen zu handhaben ist, bei der Verunreinigungen die Handhabung nicht stören, bei der eine merkbare Sollmontageposition einstellbar ist, die auch lagegesichert ist und die äußerst stabil und auch torsionsstabil ist.

Die Erfindung ist nicht auf das Ausführungsbeispiel beschränkt, sondern im Rahmen der Offenbarung vielfach variabel.

Alle neuen, in der Beschreibung und/oder Zeichnung offenbarten Einzel- und Kombinationsmerkmale werden als erfindungswesentlich angesehen.

## Patentansprüche

1. Anordnung aus Kunststoff für die Betonbauinstallation zur lagerichtigen Anordnung und Halterung von Installationsteilen (1), insbesondere elektrotechnischen Installationsteilen, bestehend aus zwei Tragteilen (2,3), die durch zwei trennbare und in mindestens zwei unterschiedlichen axialen Positionen fest zusammenfügbare Abstandshalter (4,5) verbunden sind, wobei die Abstandshalter (4,5) über quer zur Längsachse der Anordnung angeordnete komplementäre Schiebeverbindungen zusammensetzbar sind, so dass insbesondere bei liegender Betonbauschalung ein Tragteil (2) an der Schalung befestigbar bzw. an diese anlegbar ist und das andere Tragteil (3) in einem der Dicke des zu betonierenden Bauteiles entsprechenden Abstand von der Schalung angeordnet ist, **dadurch gekennzeichnet, dass** der erste Abstandhalter (4) durch ein von dem ersten Tragteil (2) abragendes Rohrprofil mit rechteckigem Querschnitt gebildet ist, welches auf zwei zueinander parallelen Außenflächen als Schiebeverbindungsmittel erste Zahnungen (6) aufweist, und dass der zweite Abstandhalter (5) durch ein vom zweiten Tragteil (3) abragendes Profilstück mit U-förmigem Querschnitt gebildet ist, welches innen liegend auf den Schenkeln als Schiebeverbindungsmittel zweite Zahnungen (7) aufweist.

2. Anordnung nach Anspruch 1, **dadurch gekennzeichnet, dass** die Zahnungen (6,7) keinen Hinterschnitt aufweisen.

3. Anordnung nach einem der Ansprüche 1 oder 2, **dadurch gekennzeichnet, dass** die Zahnungen (6,7) durch im Querschnitt rechteckige Stabformen gebildet sind.

4. Anordnung nach einem der Ansprüche 1 bis 3, **dadurch gekennzeichnet, dass** die Zahnungen (6,7) nahezu spielfrei ineinander greifen, so dass Bewegungen in Längsrichtung der Abstandhalter (4,5) unterbunden sind.

5. Anordnung nach einem der Ansprüche 1 bis 4, **dadurch gekennzeichnet, dass** mindestens die zahnungsfreien Seitenflächen des Rohrprofils und/oder die Basisfläche des Profilstücks großflächige Wandungsausnehmungen (8,9) aufweisen.

6. Anordnung nach einem der Ansprüche 1 bis 5, **dadurch gekennzeichnet, dass** am in Einschubrichtung des Profilstückes hinten liegenden Wandungsbereich des Rohrprofils federnde Rastnasen (10), die bei aufgeschobenen Profilstück jeweils eine der an beiden freien Schenkelenden des Profilstückes vorgesehenen Rastleisten (11) rastend übergreifen, sowie nicht federnde Haltenasen (12) vorgesehen ist, die die Rastleisten (11) in der Einschubposition übergreifen.

7. Anordnung nach Anspruch 6, **dadurch gekennzeichnet, dass** jeweils paarweise zwei federnde Rastnasen (10) und zwischen diesen eine nicht federnde Haltenase (12) eng benachbart nebeneinander vorgesehen sind.

8. Anordnung nach einem der Ansprüche 6 oder 7, **dadurch gekennzeichnet, dass** jede Rastnase (10) am freien Ende eines L-förmigen, an einer zahnungsfreien Wandung des Rohrprofils außen angeformten Steges ausgebildet ist.

9. Anordnung nach einem der Ansprüche 6 bis 8, **dadurch gekennzeichnet, dass** jede nicht federnde Haltenase (12) durch einen L-förmigen, an einer zahnungsfreien Wandung des Rohrprofils außen angeformten steifen Steg gebildet ist.

10. Anordnung nach Anspruch 9, **dadurch gekennzeichnet, dass** der Steg durch eine in Steglängsrichtung verlaufende, außenseitig des Steges angeformte Rippe (14) versteift ist.

11. Anordnung nach einem der Ansprüche 8 bis 10, **dadurch gekennzeichnet, dass** der an der zahnungsfreien Wandung angeformte Schenkel des die Rastnase (10) tragenden Steges federnd ausgebildet ist.

12. Anordnung insbesondere nach einem der Ansprüche 1 bis 11, **dadurch gekennzeichnet, dass** jedes Tragteil (2,3) aus einer im wesentlichen ebenen Platte besteht, die an ihrer dem anderen Tragteil abgewandten Seite druckknopfartige Verbinder (13) und/oder zu einem druckknopfartigen Verbinder komplementäre Rastlochungen aufweist, und dass jedes an dem Tragteil (2,3) befestigbare Installationsteil (1), z.B. in Form einer Installationsdose oder eines Magnethalters, eine zur Platte des Tragteils passende Fläche mit druckknopfartigen Verbindern und/oder Rastlochungen aufweist, so dass das Installationsteil (1) mit dem Tragteil (2,3) steckverbindbar ist.

13. Anordnung nach einem der Ansprüche 1 bis 12, **dadurch gekennzeichnet, dass** der durch das Profilstück gebildete zweite Abstandhalter (5) außenseitig über die Schenkel und die Basis verlaufende, angeformte Versteifungsstege (15) aufweist.
